# EUROPEAN PATENT APPLICATION

(11) **EP 4 783 521 A1**
(43) Date of publication of application: **29.07.2026**
(21) Application number: 26154480.3
(22) Date of filing: 27.01.2026
(51) Int. Cl.: H04L 9/40, H04L 9/32, G06N 20/00

(54) **ZERO-TRUST GATEWAY SYSTEM FOR SINGLE SIGN-ON ACCESS**

(30) Priority: 28.01.2025 US 202519039623
(71) Applicant: Capital One Services, LLC, McLean, Virginia 22102 (US)
(72) Inventor: WANG, Jinlian, Falls Church (US); ZELLER, Peter, Groveland (US); GILBERTI, Anthony, Glen Allen (US); KHATRI, Pranav, Boyds (US); NADAKUDUTY, Perraju, Chantilly (US)
(74) Representative: Boult Wade Tennant LLP

(57) **Abstract**

A zero-trust gateway system is provided for enforcing a zero-trust principle for granting access to one or more single sign-on (SSO) service provider entities provided in a zero-trust network. The zero-trust gateway system includes a plurality of interfaces for communicating with the one or more SSO service provider entities, one or more SSO identity provider entities, and one or more data sources provided in the zero-trust network; and one or more processors configured to: detect an authentication event associated with an access attempt for an SSO service provider entity of the one or more SSO service provider entities, the access attempt being indicated by an SSO identity provider entity of the one or more SSO identity provider entities; and authenticate or limit the access attempt based on information associated with the access attempt, the information being obtained from the one or more data sources.

## Description

### BACKGROUND

Identity and access management (IAM) systems are generally designed to implement policies and technologies to ensure that the right users and devices have appropriate access to information technology (IT) resources. IAM systems typically support features related to IT security and data management, and are used to identify, authenticate, and control access for users that will be utilizing IT resources in addition to hardware and/or applications that the users need to access, often across increasingly heterogeneous technology environments and/or to satisfy increasingly rigorous compliance requirements. For example, an IAM system may support processes to issue identities, to assign roles and/or permissions that grant access rights to the identities, and/or to identify, authenticate, and/or control access to IT resources (e.g., applications, services, systems, and/or networks) according to assigned access rights.

### SUMMARY

In some implementations, a zero-trust gateway system for enforcing a zero-trust principle for granting access to one or more single sign-on (SSO) service provider entities provided in a zero-trust network includes one or more first interfaces for communicating with the one or more SSO service provider entities provided in the zero-trust network; one of more second interfaces for communicating with one or more SSO identity provider entities, wherein the zero-trust gateway system is configured as a security gateway between the one or more SSO identity provider entities and the one or more SSO service provider entities; one or more third interfaces for communicating with one or more data sources provided in the zero-trust network; one or more memories; and one or more processors, communicatively coupled to the one or more memories, configured to: detect an authentication event associated with an access attempt for an SSO service provider entity of the one or more SSO service provider entities, the access attempt being indicated by an SSO identity provider entity of the one or more SSO identity provider entities; and authenticate or limit the access attempt based on information associated with the access attempt, the information being obtained from the one or more data sources.

In some implementations, a method for enforcing a zero-trust principle for granting access to one or more SSO service provider entities provided in a zero-trust network includes detecting, by a zero-trust gateway system, an authentication event associated with an access attempt for an SSO service provider entity of the one or more SSO service provider entities, the access attempt being indicated by an SSO identity provider entity of one or more SSO identity provider entities; receiving, by the zero-trust gateway system, an identity token from the SSO identity provider entity; obtaining, by the zero-trust gateway system, information associated with the access attempt from one or more data sources in the zero-trust network; analyzing, by the zero-trust gateway system, the access attempt based on the information and according to one or more zero-trust security protocols to authenticate or limit the access attempt; and providing, by the zero-trust gateway system, the identity token to the SSO service provider entity for granting access to the SSO service provider entity based on authenticating the access attempt; or blocking or amending, by the zero-trust gateway system, the identity token for limiting access to the SSO service provider entity based on limiting the access attempt.

In some implementations, a non-transitory computer-readable medium storing a set of instructions includes one or more instructions that, when executed by one or more processors of a verification system, cause the verification system to: detect an authentication event associated with an access attempt for an SSO service provider entity provided in a zero-trust network, the access attempt being indicated by an SSO identity provider entity; receive an identity token from the SSO identity provider entity; obtain information associated with the access attempt from one or more data sources in the zero-trust network; analyze the access attempt based on the information and according to one or more zero-trust security protocols to authenticate or limit the access attempt; and provide the identity token to the SSO service provider entity for granting access to the SSO service provider entity based on authenticating the access attempt; or block or amend the identity token for limiting access to the SSO service provider entity based on limiting the access attempt.

### BRIEF DESCRIPTION OF THE DRAWINGS

Fig. 1 is a diagram illustrating an authorization system according to one or more implementations, in accordance with some embodiments of the present disclosure.
Fig. 2 is a diagram illustrating an example environment in which systems and/or methods described herein may be implemented, in accordance with some embodiments of the present disclosure.
Fig. 3 is a diagram illustrating example components of a device associated with zero-trust authentication and authorization, in accordance with some embodiments of the present disclosure.
Fig. 4 is a flowchart of an example process associated with a zero-trust gateway system for SSO access, in accordance with some embodiments of the present disclosure.

### DETAILED DESCRIPTION

The following detailed description of example implementations refers to the accompanying drawings. The same reference numbers in different drawings may identify the same or similar elements.

Traditional information technology (IT) security models are typically based on a "castle-and-moat" model that protects IT resources from external threats that originate from outside a protected zone or perimeter of an IT network (e.g., a private network) while inherently trusting users or devices that are already within the perimeter of the IT network. Enterprises that use the castle-and-moat model or similar IT security models typically dedicate significant resources to protecting the perimeter of the IT network (e.g., deploying firewalls, intrusion detection systems, and/or other security measures that may be effective in blocking most external attacks). However, trusting individuals and/or machine entities that are within the perimeter of the IT network is a flawed approach, as there may be insider threats, internal attacks, data breaches, and/or machine entities that have been compromised in an external attack. As a result, traditional IT security models may allow bad actors to roam freely within a protected IT environment, obtain unauthorized access to data, and/or increase the potential scale and/or severity of a cyberattack. Furthermore, IT security models that focus on preventing external attacks are becoming increasingly outdated, as many or most organizations distribute IT resources across one or more cloud vendors or cloud environments, rather than hosting the IT resources behind an on-premises perimeter.

Single sign-on (SSO) is an authentication process that allows a user to log in once and gain access to multiple applications or services without needing to re-enter credentials for each system. SSO streamlines authentication by centralizing authentication across various platforms, making it more convenient for users while still maintaining security. For example, a user may initiate an access event (e.g., an access attempt) to access an application (in some cases referred to as a service provider (SP), an SSO application, or an SSO service provider entity) that supports SSO. The service provider can be any web-based application, such as email, customer relationship management (CRM) system, or cloud-based service. If the user is not yet authenticated, the application (SP) may redirect the user to an identity provider (IdP) (in some cases referred to as an SSO identity provider entity). The IdP may be a trusted platform responsible for authenticating the user. Some examples of an IdP include services, such as Google, Okta, Azure AD, or other directory services. The user may enter one or more authentication credentials (e.g., username, password, or another authentication method) on an IdP login page. If the IdP supports multifactor authentication (MFA), the user may be asked for additional verification, such as a code sent to a mobile device or an authenticator application. The IdP may check the authentication credentials against stored credentials in a database (or directory service) to verify a user's identity. If the credentials are correct and additional security checks pass (such as MFA or location-based rules), the IdP authenticates the user. Otherwise, the access attempt fails and is denied.

After a successful authentication, the IdP generates an access credential, such as a token, which contains information about the authenticated user. The access credential may be encrypted and may contain claims about the user (e.g., user ID, email, role). The access credential may be sent back to the service provider (the initial application the user wanted to access). The service provider may verify the access credential using shared trust with the IdP. If the access credential is valid and trusted, the service provider may grant the user access to the application. The user may not need to log in again unless a session expires or the user logs out. Additionally, once authenticated by the IdP, the user may access other applications that are part of the same SSO network without needing to log in again.

However, identity providers are typically located outside of a protected zone or perimeter of an IT network and do not provide robust security measures against various types of threats. For example, identity providers may be primarily focused on authenticating users against an identity store, performing MFA challenges, and connecting users to a range of applications. Aside from detecting matches or mismatches between authentication credentials and stored credentials, identity providers may have limited capabilities in detecting other threats associated with abnormal behavior or conditions, breaches, attacks, high-risk activity, lack of entitlement, lack of trust, outdated software, manipulated data, and/or information inaccessible to the identity providers. Thus, SSO may fall short in addressing comprehensive security needs of modern enterprises.

Accordingly, some implementations described herein relate to an authentication system, such as a zero-trust gateway system, that implements a zero-trust IT security model that requires strict identity verification for every user and every device attempting to access a protected IT resource, regardless of whether a user or device is located within or outside a perimeter of a protected IT environment. For example, the zero-trust gateway system described herein may implement various features and technologies based on the premise that no user or device is trusted by default, such that each user and each device attempting to gain access to an IT resource always has to be authenticated (e.g., verifying that the subject, whether a user or a device, is who the subject claims to be) and authorized (e.g., permitted to access the IT resource that the subject is attempting to access). The zero-trust gateway system may be configured to enforce a zero-trust principle for granting access to one or more SSO service provider entities (e.g., applications) provided in the protected IT environment, such as a zero-trust network. The zero-trust gateway system may be configured as a security gateway or a security interface between one or more SSO identity provider entities and the one or more SSO service provider entities. The zero-trust gateway system may provide an additional layer security to allow or limit an SSO access attempt. Allowing the SSO access attempt may include granting full access to an SSO service provider associated with the SSO access attempt. Limiting the SSO access attempt may include rejecting or denying the SSO access attempt altogether, thereby blocking access to the SSO service provider. Alternatively, limiting the SSO access attempt may include restricting, narrowing, or altering permissions for the SSO access attempt in such a way that some, but not all, access to the SSO service provider is permitted (e.g., limited access is granted).

For example, the zero-trust gateway system may authenticate an SSO access attempt based on additional information accessible to an IT system of the zero-trust network. The zero-trust gateway system may assess threats associated with abnormal behavior, high-risk activity, lack of entitlement, lack of trust, outdated software, and/or user data platform, and determine whether or not to grant access based on one or more threat assessments. In some implementations, the zero-trust gateway system may receive an identity token associated with an authentication event (e.g., an access attempt) from an SSO identity provider, and provide the identity token to an SSO service provider entity for granting access to the SSO service provider entity based on authenticating the access attempt. Alternatively, the zero-trust gateway system may block the identity token from the SSO service provider entity for denying access to the SSO service provider entity based on limiting the access attempt. In some cases, instead of blocking the identity token from the SSO service provider to limit the access attempt, the zero-trust gateway system may amend the identity token for limiting the access attempt, and provide the amended identity token access to the SSO service provider entity to limit the access attempt. The zero-trust gateway system may decide between blocking or amending the identity token based on the SSO service provider entity being attempted for access, based on a vulnerability score compared to one or more security thresholds, user entitlements or permissions, and/or other security factors.

In some implementations, as described in further detail herein, the zero-trust gateway system may be configured to verify each user and machine entity at each leg or segment of an authentication and authorization context (e.g., according to multiple factors, which may include an identity, a location, a device, a service, a workload, a data classification, and/or an anomaly, among other examples). Furthermore, when a machine or non-machine entity is authenticated and authorized to access an IT resource, the zero-trust system may grant the access using least privileges (e.g., no privileges or just-enough-access (JEA)), where the requesting entity is only granted as much access as needed to access the IT resource. In this way, the least privileges or JEA techniques may minimize exposure of sensitive IT resources or data. In addition, the zero-trust system may provide just-in-time (JIT) access, which may grant an authenticated and authorized entity temporary and on-demand permissions to access an IT resource. In this way, a user or device that may not typically need to use certain IT resources can receive timely access to the IT resources when needed, but access is always temporary and granted only at the time when the user or device attempts to access the target IT resource. Furthermore, as described herein, the zero-trust system may use end-to-end encryption, and may use analytics for visibility and continuous machine learning, and active threat detection to refine security policies over time.

The zero-trust gateway system may be designed to be identity provider-agnostic and may function as a versatile gateway, interfacing seamlessly with various identity providers. The zero-trust gateway system may integrate with various data and security systems, including user data platforms, and may utilize comprehensive data to make better access decisions. Thus, the zero-trust gateway system may function as a gateway to all SSO-compatible applications to provide more robust security checks, instead of performing only SSO credential and MFA verification, before granting access to any application. As a result, the zero-trust gateway system may provide advanced security features crucial for today's security demands.

In some implementations, the zero-trust gateway system may integrate seamlessly with one or more data sources, such as one or more device posture vendors (e.g., CrowdStrike), to enhance security by considering a state and trustworthiness of user equipment (UE). In some examples, the zero-trust gateway system may function as a circuit breaker (e.g., an on-off switch) for authentication requests based on one or more restrictions provided by the zero-trust network. Thus, the zero-trust gateway system may intercept and deny authentication requests at multiple levels, including at an application level, a user level, or an endpoint level. In some examples, the zero-trust gateway system may be integrated with a user and entity behavior analytics (UEBA) platform for advanced monitoring and analysis, enhancing detection and response to potential threats. In some examples, the zero-trust gateway system may enable session-level zero-trust enforcement for all SSO compatible applications, at one point device and at one point of entry, through a simple intuitive web interface. In some examples, the zero-trust gateway system may limit authentication requests based on entitlement provisions or based on a lack of entitlement provisions for the SSO compatible application. In some examples, the zero-trust gateway system may remove high-risk entitlements from claims when risk scoring is high. In addition, the zero-trust gateway system may limit user access to lower-sensitive activities within the application, and block user access to higher-sensitive activities within the application, based on entitlement provisions and/or assessed threat level. In addition, the zero-trust gateway system may limit user permissions to lower-sensitive activities within the application, based on permission provisions and/or assessed threat level. In addition, the zero-trust gateway system may provide a fast-pass solution to all SSO compatible applications once initial access to any SSO application is granted, while adhering to zero-trust principles.

Accordingly, the zero-trust gateway system may be integrated with an SSO security model and may function as a comprehensive gateway for SSO access that enhances a security posture of an IT network environment, aligns with zero-trust principles, and integrates effortlessly with identity provider entities.

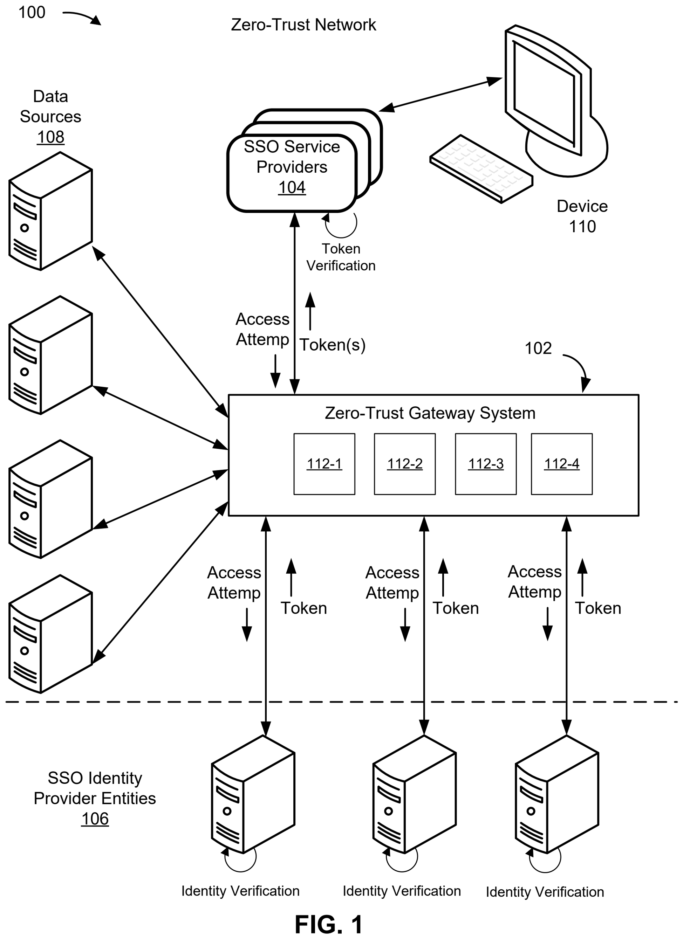

Fig. 1 is a diagram illustrating an authorization system 100 according to one or more implementations. The authorization system 100 may include a zero-trust gateway system 102, one or more SSO service provider entities 104 (e.g., SSO compatible applications), one or more SSO identity provider entities 106, and one or more data sources 108. The zero-trust gateway system 102 may be associated with enforcing a zero-trust principle for granting access to the one or more SSO service provider entities 104 provided in a zero-trust network. The SSO service provider entities 104 may be associated with a user device 110, such as a computer, a mobile device, or other UE, operated by a user for accessing the SSO service provider entities 104. The user device 110 may be located within or outside of an IT network environment.

The zero-trust gateway system 102 may include a plurality of interfaces (e.g., communications interfaces) for communicating with the one or more SSO service provider entities 104, the one or more SSO identity provider entities 106, and the one or more data sources 108. The plurality of interfaces may include wired connections, wireless connections, or a combination of wired and wireless connections. For example, the zero-trust gateway system 102 may include one or more first interfaces for communicating with the one or more SSO service provider entities 104, one of more second interfaces for communicating with one or more SSO identity provider entities 106, and one or more third interfaces for communicating with one or more data sources 108. The zero-trust gateway system 102 may be connected to the user device 110 for exchanging communications between the zero-trust gateway system 102 and the SSO service provider entities 104.

In some implementations, the zero-trust gateway system 102 may be connected to an administrative terminal for receiving configuration information. Additionally, or alternatively, the zero-trust gateway system 102 may receive configuration information from one or more SSO service provider entities 104. Configuration information may configure the zero-trust gateway system 102 to associate with or otherwise interact with specified SSO identity provider entities 106 and/or specified data sources 108 for a particular SSO service provider entity 104. In other words, the zero-trust gateway system 102 may be configured to route an identity verification of an access attempt to a particular SSO identity provider entity 106, and/or use data from specified data sources 108 for making an access decision for the access attempt. Additionally, or alternatively, the configuration information may set security criteria, including one or more thresholds and/or logic decision trees (e.g., whether to block or amend the identity token). Additionally, or alternatively, the configuration information may specify one or more user devices from which access to a particular SSO service provider entity 104 is permitted. Thus, the configuration information may specify one or more trusted devices. Additionally, or alternatively, the configuration information may require the user device 110 to be a dedicated network for granting access. Additionally, or alternatively, the configuration information may require use of privileged accounts for granting access.

The zero-trust gateway system 102 may be configured as a security gateway between the one or more SSO identity provider entities 106 and the one or more SSO service provider entities 104. Put another way, the zero-trust gateway system 102 may function as a point of entry, into the zero-trust network, for access credentials, such as tokens, received from the SSO identity provider entities 106. The zero-trust gateway system 102 may enable or block or amend passage of the access credentials from the SSO identity provider entities 106 to the SSO service provider entities 104. For example, by enabling passage of the access credentials from the SSO identity provider entities 106 to the SSO service provider entities 104, the zero-trust gateway system 102 may authorize or otherwise grant access to one or more SSO service provider entities 104. In some implementations, enabling passage of the access credentials may include reissuing the access credentials. For example, the zero-trust gateway system 102 may decrypt the access credentials (e.g., decrypt an identity token) and reissue the access credentials as a reissued or reprovisioned token. In some examples, the zero-trust gateway system 102 may encrypt (sign) the access credentials to reissue the identity token as a reissued token. Thus, the zero-trust gateway system 102 may reissue and sign a token using its own signature. Reissuing the identity token may allow the zero-trust gateway system 102 to amend one or more claims in the identity token and reissue the amended claims as the reissued token. The zero-trust gateway system 102 may then provide the reissued token to an SSO service provider entity 104. Thus, the zero-trust gateway system 102 may conditionally issue the access credentials to the SSO service provider entity 104.

In some implementations, enabling passage of the access credentials may include sending a reference token. The zero-trust gateway system 102 may store reference credentials (e.g., reference tokens), with each reference token being associated with a respective SSO identity provider entity 106 and/or a respective SSO service provider entity 104. In addition, multiple reference tokens, with different levels of entitlements or permissions, may be stored for each SSO service provider entity 104. When granting full access or limited access to an SSO service provider entity 104, the zero-trust gateway system 102 may select one of the reference tokens associated with the SSO identity provider entity 106 and/or SSO service provider entity 104 for transmission to the SSO service provider entity 104. In some cases, the zero-trust gateway system 102 may perform a lookup against the SSO identity provider entity 106 to determine which reference token(s) are associated with the access attempt. For example, based on receiving access credentials from an SSO identity provider entity 106, the zero-trust gateway system 102 may perform a security assessment on the access attempt, and select one of the reference tokens based on the security assessment (e.g., based on a vulnerability score or a confidence score associated with the access attempt). Of course, the zero-trust gateway system 102 may decide to block the access attempt entirely, and send a message to the SSO service provider entity 104 that access is denied.

Based on determining to block an identity token that has been received from an SSO identity provider entity 106, the zero-trust gateway system 102 may communicate with the SSO identity provider entity 106 to revoke the identity token. In other words, the SSO identity provider entity 106 may notify that the SSO identity provider entity 106 that the identity token has been rejected (e.g., access denied). The SSO identity provider entity 106 may revoke the identity token based on receiving a revocation command from the zero-trust gateway system 102.

In some implementations, the zero-trust gateway system 102 may initially determine to grant access to an SSO service provider entity 104, but later determine to revoke the access to the SSO service provider entity 104, for example, based on new information or heightened security risk being detected. Thus, the zero-trust gateway system 102 may be configured to revoke the identity token previously provided to the SSO service provider entity 104. Thus, the zero-trust gateway system 102 may communicate with the SSO identity provider entity 106 to revoke the identity token, which would cut-off access to the SSO service provider entity 104. The SSO identity provider entity 106 may revoke the identity token based on receiving a revocation command from the zero-trust gateway system 102.

The SSO service provider entity 104 may receive the access credential (e.g., an identity token, a reissued token, a reference token, or other zero-trust gateway token) and verify the access credential to grant user access to the SSO service provider entity 104. In contrast, by blocking or amending passage of the access credentials from the SSO identity provider entities 106 to the SSO service provider entities 104, the zero-trust gateway system 102 may limit or otherwise deny access to one or more SSO service provider entities 104.

In some examples the zero-trust gateway system 102 may modify one or more claims within an access credential, or attach a further credential to the access credential that may modify user access to the one or more SSO service provider entities 104 prior to passing the access credential to the one or more SSO service provider entities 104. By modifying one or more claims of the access credential, the zero-trust gateway system 102 may limit access within one or more SSO service provider entities 104 to low-risk activities, low-risk functions, and/or information with a lower-sensitivity. The SSO service provider entity 104 may receive the access credential and grant a corresponding level of access based on the claims within or attached to the access credential.

The data sources 108 may be associated with an endpoint protection platform (EPP), a user data platform (UDP), a user and entity behavioral analytics platform, a security information and event management (SIEM) system, or a security orchestration, automation, and response (SOAR) system, among other examples. The data sources 108 may be incorporated within the zero-trust network for providing information to the zero-trust gateway system 102. The zero-trust gateway system 102 may use the information from the data sources 108 to perform one or more risk-based assessments for authorizing or limiting an access attempt to one or more of the SSO service provider entities 104. Additionally, or alternatively, the zero-trust gateway system 102 may factor in one or more determinations made by the data sources 108 for making risk-based assessments for authorizing or limiting an access attempt to one or more of the SSO service provider entities 104. The zero-trust gateway system 102 may include one or more authorization management components 112-1, 112-2, 112-3, 112-4 (e.g., processors) that are associated with the data sources 108 for assessing one or more access parameters. For example, each authorization management component 112-1, 112-2, 112-3, 112-4 may be associated with one or more data sources 108. One or more of the authorization management components 112-1, 112-2, 112-3, 112-4 may include a cryptographic engine (e.g., a decryption/encryption engine), which may be used to decrypt one or more identity tokens received from the SSO identity provider entities 106 and reissue a token or other credential for granting full or limited access to one or more SSO service provider entities 104. One or more of the authorization management components 112-1, 112-2, 112-3, 112-4 may include a provisioning engine for generating reference tokens and issuing reference tokens based on an access decision.

An EPP is a comprehensive security solution designed to protect endpoint devices (such as laptops, desktops, mobile devices, servers, and workstations) from a wide variety of cybersecurity threats. An EPP combines various security technologies to prevent, detect, and respond to both known and unknown threats at the endpoint level. Endpoints are critical points of vulnerability because they serve as entry points for attackers seeking to exploit systems. EPP solutions help mitigate these risks by using a combination of signature-based detection, machine learning, behavioral analysis, and more to secure endpoint devices. EPP solutions may use behavioral analysis, machine learning, and heuristics to detect zero-day threats and unknown malware. An EPP may monitor endpoint activities in real-time to detect suspicious behavior patterns that could indicate malicious activity. An EPP may include a host-based firewall, which may control network traffic coming to and from the endpoint, helping to block or amend unwanted or suspicious connections. In addition, an EPP may monitor endpoint activities to detect unusual behaviors, such as unauthorized system changes or file manipulations, and respond by block or amending or isolating threats. An EPP may include controls to restrict the use of external devices to prevent the introduction of malware or data exfiltration.

A UDP is a centralized system or platform that collects, organizes, and manages data about users from multiple sources to create a unified, comprehensive view of each user. The primary purpose of a UDP is to enable an enterprise to better understand a user's behaviors, preferences, and interactions across various touchpoints. By aggregating this data, organizations can deliver determine normalized user behavior, patterns, and trends, which may be used to detect abnormal user behavior, patterns, and trends indicative of a bad actor pretending to the user and/or high-risk behavior by the user.

A SIEM system is a centralized platform used to collect, monitor, and analyze security-related data from various sources within an organization's IT infrastructure. A SIEM system provides real-time visibility into network activity, detects potential security threats, and helps organizations respond to incidents. A SIEM system may collect security-related data from a wide range of sources, such as firewalls, intrusion detection/prevention systems (IDS/IPS), antivirus/anti-malware software, servers, databases, and network devices (routers, switches), cloud services and applications, and/or user activities and authentication logs. A SIEM system may analyze the collected logs and use correlation rules to identify patterns or relationships between seemingly unrelated events. This may help detect potential security incidents that might not be evident from a single log source. For example, failed login attempts followed by a successful login from a different geographic location could indicate a breach. A SIEM system may use various techniques, including signature-based detection, anomaly-based detection, and/or UEBA. During signature-based detection, a SIEM system may identify known threats by comparing events against predefined patterns or signatures (e.g., virus signatures). During anomaly-based detection, a SIEM system may detecting unusual activity, which could indicate new or unknown threats. Using UEBA, a SIEM system may monitor the behavior of users, devices, and systems to detect abnormal actions that could suggest a compromised account or security threat.

The zero-trust gateway system 102 may detect an authentication event associated with an access attempt for an SSO service provider entity 104. By sending a credential to the zero-trust gateway system 102, the SSO identity provider entity 106 may indicate the access attempt and/or the authentication event to the zero-trust gateway system 102. The zero-trust gateway system 102 may authenticate or limit the access attempt based on information associated with the access attempt, the information being obtained from the one or more data sources 108. For example, the access attempt may be initiated by an access requester by attempting to sign-in or otherwise access the SSO service provider entity 104 at the user device 110. The zero-trust gateway system 102 may direct the access attempt to a corresponding SSO identity provider entity 106, which may require the user to provide authentication credentials. The corresponding SSO identity provider entity 106 may perform an identity verification by checking the authentication credentials against stored credentials in a database (or directory service) to verify a user's identity. If the credentials are correct and additional security checks pass (such as MFA or location-based rules), the corresponding SSO identity provider entity 106 may authenticate the user, generate an access credential, such as an identity token, and send the access credential to the zero-trust gateway system 102.

The zero-trust gateway system 102 may detect the authentication event based on receiving the access credential from the corresponding SSO identity provider entity 106, and perform one or more risk-based assessments based on detecting the authentication event. In some implementations, the zero-trust gateway system 102 may detect the authentication event based on detecting the access attempt from the user device 110. The zero-trust gateway system 102 may provide the access credential to the SSO service provider entity 104 for granting access to the SSO service provider entity 104 based on authenticating the access attempt. Alternatively, the zero-trust gateway system 102 may block or amend the access credential from the SSO service provider entity 104 for denying access or limiting access to the SSO service provider entity 104 based on limiting the access attempt. Thus, all access credentials received from the SSO identity provider entities 106 are directed through the zero-trust gateway system 102 in order for an SSO access to be granted.

In some implementations, the zero-trust gateway system 102 may step up authentication prior to making an access decision. For example, the zero-trust gateway system 102 may initiate a stepped-up authentication protocol, such as MFA, based on an initial security assessment. For example, the zero-trust gateway system 102 may initiate a stepped-up authentication protocol based on an initial vulnerability score or an initial confidence score satisfying a threshold. In some examples, the zero-trust gateway system 102 may route the access attempt to one or more additional SSO identity provider entities 106 for additional identity verification steps. Additionally, or alternatively, the zero-trust gateway system 102 may direct the access requester to complete additional authentication steps on a trusted device. Additionally, or alternatively, the zero-trust gateway system 102 may transmit a request to a manager or to IT personnel to approve access. The zero-trust gateway system 102 may make a final access decision of whether to grant access, deny access, or grant access with limited claims based on the stepped-up authentication.

In some examples, the zero-trust gateway system 102 may decrypt the access credential (e.g., the identity token) to obtain user information from the access credential, and obtain the information associated with the access attempt based on the user information. For example, the zero-trust gateway system 102 may assess one or more claims in the access credential in conjunction with the information received from the data sources 108 to perform one or more risk-based assessments. For example, the zero-trust gateway system 102 may obtain a user identifier (ID), an email, and/or a role from the access credential, and obtain information from the data sources 108 corresponding to the user ID, the email, and/or the role for performing one or more risk-based assessments.

In some examples, the zero-trust gateway system 102 may grant the access requester access to all SSO service provider entities 104 based on authenticating the access attempt (e.g., grant all access attempts initiated from the user device 110 is a same session). Thus, the zero-trust gateway system 102 may provide fast-pass access to all SSO compatible applications, in a same session, once initial access to any SSO compatible application is granted. The fast-pass access may reduce an amount of processing resources, power resources, memory resources, and/or IT resources used by the zero-trust gateway system 102, the data sources 108, and/or the zero-trust network that would otherwise be required to assess each access attempt made in a same session, and may provide an authorized user faster access to multiple SSO compatible applications after having been authenticated. In addition, the zero-trust gateway system 102 may deny the access requester access to all SSO service provider entities 104 based on the limiting a single access attempt.

To authenticate or limit the access attempt, the zero-trust gateway system 102 may, based on the information received from the data sources 108, validate whether the access requester is an authorized user, and authenticate the access attempt based on the access requester being the authorized user.

To authenticate or limit the access attempt, the zero-trust gateway system 102 may perform, based on the information received from the data sources 108, an assessment on a device (e.g., user device 110) associated with the access requester from which the access attempt originates to determine a vulnerability score that indicates a likelihood that the device is associated with a security risk. The zero-trust gateway system 102 may limit the access attempt based on the vulnerability score satisfying a threshold, or may authenticate the access attempt based on the vulnerability score not satisfying the threshold. For example, the zero-trust gateway system 102 may limit the access attempt based on the vulnerability score exceeding the threshold. Thus, the zero-trust gateway system 102 may perform a risk-based assessment (e.g., an EPP assessment) based on the information received from the data sources 108.

To authenticate or limit the access attempt, the zero-trust gateway system 102 may determine, based on the information received from the data sources 108, whether an access restriction associated with the access attempt is enabled or disabled. The zero-trust gateway system 102 may limit the access attempt based on the access restriction being enabled, or authenticate the access attempt based on the access restriction being disabled. For example, the zero-trust gateway system 102 may function as a circuit breaker (e.g., an on-off switch) for authentication requests based on one or more restrictions provided by the zero-trust network (e.g., set by an IT operator). Thus, the zero-trust gateway system may intercept and deny authentication requests at multiple levels, including at an application level, a user level, an endpoint level, or a global level.

To authenticate or limit the access attempt, the zero-trust gateway system 102 may determine, based on the information received from the data sources 108, whether one or more anomalous conditions associated with the access attempt are present. The zero-trust gateway system 102 may limit the access attempt based on the one or more anomalous conditions being present, or authenticate the access attempt based on one or more anomalous conditions not being present. Thus, the zero-trust gateway system 102 may assess anomalous behavior that may be indicative of an cyberattack or another security threat. In some example, to determine whether one or more anomalous conditions associated with the access attempt are present, the zero-trust gateway system 102 may evaluate a behavior pattern associated with the access attempt to determine a vulnerability score that indicates a likelihood that an anomalous condition is present. The zero-trust gateway system 102 may limit the access attempt based on the vulnerability score satisfying a threshold, or authenticate the access attempt based on the vulnerability score not satisfying the threshold. To evaluate a behavior pattern associated with the access attempt, the zero-trust gateway system 102 may compare the behavior pattern associated with the access attempt with a typical behavior pattern of an authorized user to determine the vulnerability score. In some case, the zero-trust gateway system 102 may use a machine learning model to evaluate behavior patterns of the authorized user over time to determine the typical behavior pattern of the authorized user, and to compare the behavior pattern associated with the access attempt with the typical behavior pattern of the authorized user in order to determine the vulnerability score.

To authenticate or limit the access attempt, the zero-trust gateway system 102 may validate, based on the information received from the data sources 108, whether the access requester has an entitlement provisioned for accessing the SSO service provider entity 104, and authenticate the access attempt based on the access requester having the entitlement provisioned for accessing the SSO service provider entity 104.

To authenticate or limit the access attempt, the zero-trust gateway system 102 may determine, based on the information received from the data sources 108, a confidence score based on the information associated with the access attempt, grant full access to the SSO service provider entity 104 based on the confidence score satisfying a first threshold, grant limited access to the SSO service provider entity based 104 on the confidence score satisfying a second threshold, or limit access to the SSO service provider entity 104 based on the confidence score not satisfying the first threshold or the second threshold. In some examples, the first threshold may be greater than the second threshold. Thus, the zero-trust gateway system 102 may limit user access to lower-sensitive activities within the SSO service provider entity 104, and block or amend user access to higher-sensitive activities within the SSO service provider entity 104, based on entitlement provisions and/or assessed threat level. In other words, the zero-trust gateway system 102 may perform risk scoring to remove high-risk entitlements from the user. Additionally, or alternatively, the zero-trust gateway system 102 may limit user permissions to lower-sensitive activities within the SSO service provider entity 104, based on permission provisions and/or assessed threat level. For example, by modifying one or more claims of the access credential, the zero-trust gateway system 102 may limit access within one or more SSO service provider entities 104 to low-risk activities, low-risk functions, and/or information with a lower-sensitivity.

As indicated above, Fig. 1 is provided as an example. Other examples may differ from what is described with regard to Fig. 1.

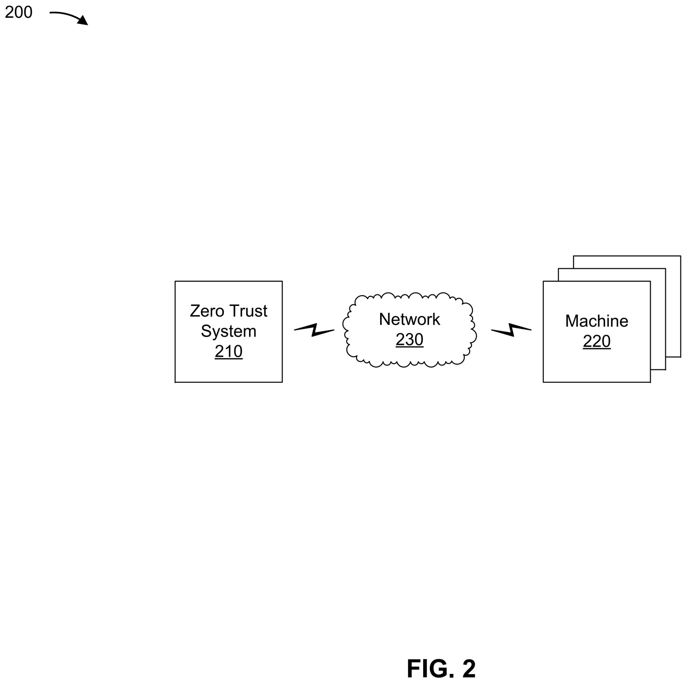

Fig. 2 is a diagram illustrating an example environment 200 in which systems and/or methods described herein may be implemented. As shown in Fig. 2, environment 200 may include a zero-trust system 210, multiple machines 220, and a network 230. Devices of environment 200 may interconnect via wired connections, wireless connections, or a combination of wired and wireless connections.

The zero-trust system 210 may include one or more devices capable of receiving, generating, storing, processing, providing, and/or routing information associated with authenticating and authorizing machine entities and non-machine entities in a zero-trust security framework, as described elsewhere herein. For example, the zero-trust system 210 may include the zero-trust gateway system 102 described in connection with Fig. 1. Additionally, the zero-trust system 210 may include one or more data sources 108. The zero-trust system 210 may include a communication device and/or a computing device. For example, the zero-trust system 210 may include a server, such as an application server, a client server, a web server, a database server, a host server, a proxy server, a virtual server (e.g., executing on computing hardware), or a server in a cloud computing system. In some implementations, the zero-trust system 210 may include computing hardware used in a cloud computing environment. Furthermore, as described herein, the zero-trust system 210 may include an ID component, a policy component, a telemetry component, a JIT/JEA component, and/or a machine learning (ML) component, each of which may include a communication device and/or a computing device.

The machines 220 may include one or more devices capable of receiving, generating, storing, processing, and/or providing information associated with authentication and authorization in a zero-trust security framework, as described elsewhere herein. For example, the machines 220 may include one or more SSO identity provider entities 106, one or more data sources 108, and one or more user devices 110 described in connection with Fig. 1. One or more SSO service provider entities 104 may be executed or operated on one or more machines 220. Thus, a machine 220 may enable an SSO service provider entity 104 to communicate with another machine 220, such as one or more SSO identity provider entities 106, and/or with the zero-trust system 210. The machines 220 may each include a communication device and/or a computing device. For example, a machine 220 may include a wireless communication device, a mobile phone, a user equipment, a laptop computer, a tablet computer, a desktop computer, a wearable communication device (e.g., a smart wristwatch, a pair of smart eyeglasses, a head mounted display, or a virtual reality headset), or a similar type of device. Additionally, or alternatively, a machine 220 may include a server, such as an application server, a client server, a web server, a database server, a host server, a proxy server, a virtual server (e.g., executing on computing hardware), a server in a cloud computing system, and/or computing hardware used in a cloud computing environment. Additionally, or alternatively, a machine 220 may include a data structure, a database, a data source, a server, a database server, an application server, a client server, a web server, a host server, a proxy server, a virtual server (e.g., executing on computing hardware), a server in a cloud computing system, a device that includes computing hardware used in a cloud computing environment, or a similar type of device. As an example, a first machine 220 may store information, host an application, provide a service, or otherwise control access to an IT resource that a second machine 220 or a user of a second machine 220 is attempting to access, as described elsewhere herein.

The network 230 may include one or more wired and/or wireless networks. For example, the network 230 may include a wireless wide area network (e.g., a cellular network or a public land mobile network), a local area network (e.g., a wired local area network or a wireless local area network (WLAN), such as a Wi-Fi network), a personal area network (e.g., a Bluetooth network), a near-field communication network, a telephone network, a private network, the Internet, and/or a combination of these or other types of networks. The network 230 enables communication among the devices of environment 200.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

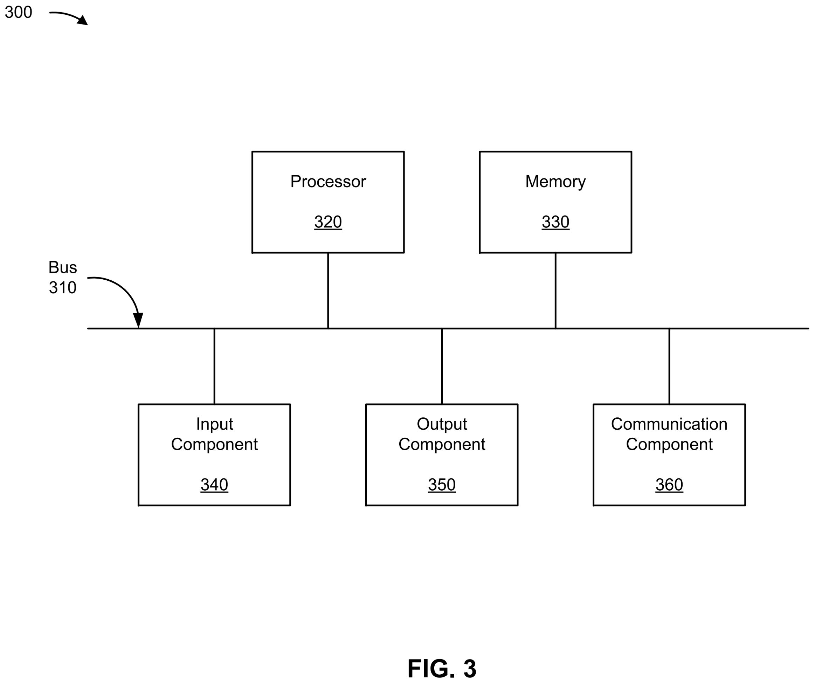

Fig. 3 is a diagram illustrating example components of a device 300 associated with zero-trust authentication and authorization. The device 300 may correspond to the zero-trust system 210 and/or one or more machines 220. For example, the device 300 may correspond to the zero-trust gateway system 102 described in connection with Fig. 1. In some implementations, the zero-trust system 210 and/or the one or more machines 220 may include one or more devices 300 and/or one or more components of the device 300. Furthermore, in some implementations, the zero-trust system 210 may include an ID component, a policy component, a telemetry component, a JIT/JEA component, and/or an ML component, each of which may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

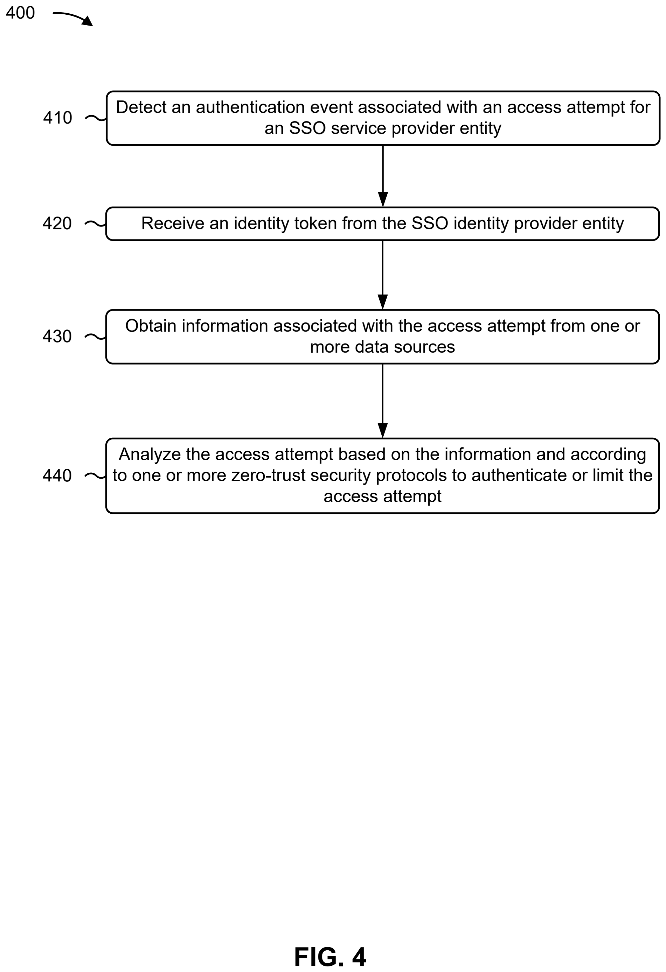

Fig. 4 is a flowchart of an example process 400 associated with a zero-trust gateway system for SSO access. In some implementations, one or more process blocks of Fig. 4 may be performed by the zero-trust gateway system 102 of a zero-trust network. In some implementations, one or more process blocks of Fig. 4 may be performed by another device or a group of devices separate from or including the zero-trust gateway system 102, such as one or more SSO service provider entities 104 (e.g., SSO compatible applications), one or more SSO identity provider entities 106, one or more data sources 108, and/or one or more user devices 110. Additionally, or alternatively, one or more process blocks of Fig. 4 may be performed by one or more components of the device 300, such as processor 320, memory 330, input component 340, output component 350, and/or communication component 360.

As shown in Fig. 4, process 400 may include detecting an authentication event associated with an access attempt for an SSO service provider entity, the access attempt being indicated by an SSO identity provider entity (block 410). For example, the zero-trust gateway system 102 (e.g., using processor 320 and/or memory 330) may detect an authentication event associated with an access attempt for an SSO service provider entity, as described above in connection with Fig. 1.

As further shown in Fig. 4, process 400 may include receiving an identity token from the SSO identity provider entity (block 420). For example, the zero-trust gateway system 102 (e.g., using processor 320, memory 330, input component 340, and/or communication component 360) may receive an identity token from the SSO identity provider entity, as described above in connection with Fig. 1.

As further shown in Fig. 4, process 400 may include obtaining information associated with the access attempt from one or more data sources in the zero-trust network (block 430). For example, the zero-trust gateway system 102 (e.g., using processor 320 and/or memory 330) may obtain information associated with the access attempt from one or more data sources in the zero-trust network, as described above in connection with Fig. 1.

As further shown in Fig. 4, process 400 may include analyzing the access attempt based on the information and according to one or more zero-trust security protocols to authenticate or limit the access attempt (block 440). The analyzing the access attempt may include providing the identity token to the SSO service provider entity for granting access to the SSO service provider entity based on authenticating the access attempt, or blocking or amending the identity token from the SSO service provider entity for limiting access to the SSO service provider entity based on limiting the access attempt. For example, the zero-trust gateway system 102 (e.g., using processor 320 and/or memory 330) may analyze the access attempt based on the information received from the one or more data sources and according to one or more zero-trust security protocols to authenticate or limit the access attempt, as described above in connection with Fig. 1. The zero-trust gateway system 102 (e.g., using processor 320, memory 330, output component 350 and/or communication component 360) may provide the identity token to the SSO service provider entity for granting access to the SSO service provider entity based on authenticating the access attempt, or block or amend the identity token from the SSO service provider entity for limiting access to the SSO service provider entity based on limiting the access attempt, as described above in connection with Fig. 1.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel. The process 400 is an example of one process that may be performed by one or more devices described herein. These one or more devices may perform one or more other processes based on operations described herein, such as the operations described in connection with Figs. 1-3. Moreover, while the process 400 has been described in relation to the devices and components of the preceding figures, the process 400 can be performed using alternative, additional, or fewer devices and/or components. Thus, the process 400 is not limited to being performed with the example devices, components, hardware, and software explicitly enumerated in the preceding figures.

The foregoing disclosure provides illustration and description, but is not intended to be exhaustive or to limit the implementations to the precise forms disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The hardware and/or software code described herein for implementing aspects of the disclosure should not be construed as limiting the scope of the disclosure. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination and permutation of those items, including single members. As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list). As an example, "a, b, and/or c" is intended to cover a, b, c, a-b, a-c, b-c, and a-b-c.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z." No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").
Various aspects and embodiments are set out in the following numbered paragraphs (NP).
NP1. A zero-trust gateway system for enforcing a zero-trust principle for granting access to one or more single sign-on (SSO) service provider entities provided in a zero-trust network, the zero-trust gateway system comprising:
   one or more first interfaces for communicating with the one or more SSO service provider entities provided in the zero-trust network;
   one of more second interfaces for communicating with one or more SSO identity provider entities, wherein the zero-trust gateway system is configured as a security gateway between the one or more SSO identity provider entities and the one or more SSO service provider entities;
   one or more third interfaces for communicating with one or more data sources provided in the zero-trust network;
   one or more memories; and
   one or more processors, communicatively coupled to the one or more memories, configured to:
      detect an authentication event associated with an access attempt for an SSO service provider entity of the one or more SSO service provider entities, the access attempt being indicated by an SSO identity provider entity of the one or more SSO identity provider entities; and
      authenticate or limit the access attempt based on information associated with the access attempt, the information being obtained from the one or more data sources.
NP2. The zero-trust gateway system of NP1, wherein the access attempt is initiated by an access requester, and
   wherein the one or more processors, to authenticate or limit the access attempt, are configured to:
   validate whether the access requester is an authorized user; and
   authenticate the access attempt based on the access requester being the authorized user.
NP3. The zero-trust gateway system of NP1, wherein the one or more processors are configured to detect the authentication event based on receiving an identity token from an SSO identity provider entity of the SSO identity provider entities.
NP4. The zero-trust gateway system of NP3, wherein the one or more processors are further configured to:
   provide, based on authenticating the access attempt, the identity token to the SSO service provider entity for granting access to the SSO service provider entity; or
   block or amend, based on limiting the access attempt, the identity token.
NP5. The zero-trust gateway system of NP3, wherein the one or more processors are further configured to:
   decrypt the identity token to obtain user information from the identity token; and
   obtain the information associated with the access attempt based on the user information.
NP6. The zero-trust gateway system of NP1, wherein the access attempt is initiated by an access requester, and
   wherein the one or more processors are further configured to:
   grant the access requester access to all SSO service provider entities of the one or more SSO service provider entities based on authenticating the access attempt.
NP7. The zero-trust gateway system of NP1, wherein the access attempt is initiated by an access requester, and
   wherein the one or more processors are further configured to:
   limit the access requester access to all SSO service provider entities of the one or more SSO service provider entities based on limiting the access attempt.
NP8. The zero-trust gateway system of NP1, wherein the access attempt is initiated by an access requester, and
   wherein the one or more processors, to authenticate or limit the access attempt, are configured to:
   perform, based on the information, an assessment on a device associated with the access requester from which the access attempt originates to determine a vulnerability score that indicates a likelihood that the device is associated with a security risk; and
   limit the access attempt based on the vulnerability score satisfying a threshold; or
   authenticate the access attempt based on the vulnerability score not satisfying the threshold.
NP9. The zero-trust gateway system of NP1, wherein the access attempt is initiated by an access requester, and
   wherein the one or more processors, to authenticate or limit the access attempt, are configured to:
   determine, based on the information, whether an access restriction associated with the access attempt is enabled or disabled; and
   limit the access attempt based on the access restriction being enabled; or
   authenticate the access attempt based on the access restriction being disabled.
NP10. The zero-trust gateway system of NP1, wherein the access attempt is initiated by an access requester, and
   wherein the one or more processors, to authenticate or limit the access attempt, are configured to:
   determine, based on the information, whether one or more anomalous conditions associated with the access attempt are present; and
   limit the access attempt based on the one or more anomalous conditions being present; or
   authenticate the access attempt based on one or more anomalous conditions not being present.
NP11. The zero-trust gateway system of NP10, wherein the one or more processors, to determine whether one or more anomalous conditions associated with the access attempt are present, are configured to:
   evaluate a behavior pattern associated with the access attempt to determine a vulnerability score that indicates a likelihood that an anomalous condition is present; and
   limit the access attempt based on the vulnerability score satisfying a threshold; or
   authenticate the access attempt based on the vulnerability score not satisfying the threshold.
NP12. The zero-trust gateway system of NP11, wherein the one or more processors, to evaluate a behavior pattern associated with the access attempt, are configured to:
   compare the behavior pattern associated with the access attempt with a typical behavior pattern of an authorized user to determine the vulnerability score.
NP13. The zero-trust gateway system of NP1, wherein the access attempt is initiated by an access requester, and
   wherein the one or more processors, to authenticate or limit the access attempt, are configured to:
   validate, based on the information, whether the access requester has an entitlement provisioned for accessing the SSO service provider entity; and
   authenticate the access attempt based on the access requester having the entitlement provisioned for accessing the SSO service provider entity.
NP14. The zero-trust gateway system of NP1, wherein the one or more processors, to authenticate or limit the access attempt, are configured to:
   determine a confidence score based on the information associated with the access attempt; and
   grant full access to the SSO service provider entity based on the confidence score satisfying a first threshold; and
      grant limited access to the SSO service provider entity based on the confidence score satisfying a second threshold; or
      limit access to the SSO service provider entity based on the confidence score not satisfying the first threshold or the second threshold.
NP15. The zero-trust gateway system of NP1, wherein the one or more data sources include at least one of:
   an endpoint protection platform,
   a user data platform,
   a user and entity behavior analytics platform, or
   a security information and event management (SIEM) system.
NP16. A method for enforcing a zero-trust principle for granting access to one or more single sign-on (SSO) service provider entities provided in a zero-trust network, the method comprising:
   detecting, by a zero-trust gateway system, an authentication event associated with an access attempt for an SSO service provider entity of the one or more SSO service provider entities, the access attempt being indicated by an SSO identity provider entity of one or more SSO identity provider entities;
   receiving, by the zero-trust gateway system, an identity token from the SSO identity provider entity;
   obtaining, by the zero-trust gateway system, information associated with the access attempt from one or more data sources in the zero-trust network;
   analyzing, by the zero-trust gateway system, the access attempt based on the information and according to one or more zero-trust security protocols to authenticate or limit the access attempt; and
      providing, by the zero-trust gateway system, the identity token to the SSO service provider entity for granting access to the SSO service provider entity based on authenticating the access attempt; or
      blocking or amending, by the zero-trust gateway system, the identity token for limiting access to the SSO service provider entity based on limiting the access attempt.
NP17. The method of NP16, wherein the access attempt is initiated by an access requester, and
   wherein the method further comprises:
   validating whether the access requester is an authorized user; and
   authenticating the access attempt based on the access requester being the authorized user.
NP18. The method of NP16, wherein detecting the authentication event comprises:
   detecting the authentication event based on receiving the identity token.
NP19. The method of NP16, wherein the access attempt is initiated by an access requester, and
   wherein the method further comprises:
   granting the access requester access to all SSO service provider entities of a plurality of SSO service provider entities based on authenticating the access attempt.
NP20. A non-transitory computer-readable medium storing a set of instructions, the set of instructions comprising:
   one or more instructions that, when executed by one or more processors of a verification system, cause the verification system to:
   detect an authentication event associated with an access attempt for a single sign-on (SSO) service provider entity provided in a zero-trust network, the access attempt being indicated by an SSO identity provider entity;
   receive an identity token from the SSO identity provider entity;
   obtain information associated with the access attempt from one or more data sources in the zero-trust network;
   analyze the access attempt based on the information and according to one or more zero-trust security protocols to authenticate or limit the access attempt; and
      provide the identity token to the SSO service provider entity for granting access to the SSO service provider entity based on authenticating the access attempt; or
      block or amend the identity token for limiting access to the SSO service provider entity based on limiting the access attempt.

## Claims

1. A zero-trust gateway system for enforcing a zero-trust principle for granting access to one or more single sign-on (SSO) service provider entities provided in a zero-trust network, the zero-trust gateway system comprising:
one or more first interfaces for communicating with the one or more SSO service provider entities provided in the zero-trust network;
one of more second interfaces for communicating with one or more SSO identity provider entities, wherein the zero-trust gateway system is configured as a security gateway between the one or more SSO identity provider entities and the one or more SSO service provider entities;
one or more third interfaces for communicating with one or more data sources provided in the zero-trust network;
one or more memories; and
one or more processors, communicatively coupled to the one or more memories, configured to:
detect an authentication event associated with an access attempt for an SSO service provider entity of the one or more SSO service provider entities, the access attempt being indicated by an SSO identity provider entity of the one or more SSO identity provider entities; and
authenticate or limit the access attempt based on information associated with the access attempt, the information being obtained from the one or more data sources.

2. The zero-trust gateway system of claim 1, wherein the access attempt is initiated by an access requester, and
(a) wherein the one or more processors, to authenticate or limit the access attempt, are configured to:
validate whether the access requester is an authorized user; and
authenticate the access attempt based on the access requester being the authorized user, and/or
(b) wherein the one or more processors are further configured to:
grant the access requester access to all SSO service provider entities of the one or more SSO service provider entities based on authenticating the access attempt, and/or
limit the access requester access to all SSO service provider entities of the one or more SSO service provider entities based on limiting the access attempt.

3. The zero-trust gateway system of claim 1 or 2, wherein the one or more
processors are configured to detect the authentication event based on receiving an identity
token from an SSO identity provider entity of the SSO identity provider entities,
optionally wherein the one or more processors are further configured to:
provide, based on authenticating the access attempt, the identity token to the SSO service provider entity for granting access to the SSO service provider entity; or
block or amend, based on limiting the access attempt, the identity token.

4. The zero-trust gateway system of claim 3, wherein the one or more processors are further configured to:
decrypt the identity token to obtain user information from the identity token; and
obtain the information associated with the access attempt based on the user information.

5. The zero-trust gateway system of any proceeding claim, wherein the access attempt is initiated by an access requester, and
wherein the one or more processors, to authenticate or limit the access attempt, are configured to:
perform, based on the information, an assessment on a device associated with the access requester from which the access attempt originates to determine a vulnerability score that indicates a likelihood that the device is associated with a security risk; and
limit the access attempt based on the vulnerability score satisfying a threshold; or
authenticate the access attempt based on the vulnerability score not satisfying the threshold.

6. The zero-trust gateway system of any proceeding claim, wherein the access attempt is initiated by an access requester, and
wherein the one or more processors, to authenticate or limit the access attempt, are configured to:
determine, based on the information, whether an access restriction associated with the access attempt is enabled or disabled; and
limit the access attempt based on the access restriction being enabled; or
authenticate the access attempt based on the access restriction being disabled.

7. The zero-trust gateway system of any proceeding claim, wherein the access attempt is initiated by an access requester, and
wherein the one or more processors, to authenticate or limit the access attempt, are configured to:
determine, based on the information, whether one or more anomalous conditions associated with the access attempt are present; and
limit the access attempt based on the one or more anomalous conditions being present; or
authenticate the access attempt based on one or more anomalous conditions not being present.

8. The zero-trust gateway system of claim 7, wherein the one or more processors, to determine whether one or more anomalous conditions associated with the access attempt are present, are configured to:
evaluate a behavior pattern associated with the access attempt to determine a vulnerability score that indicates a likelihood that an anomalous condition is present; and
limit the access attempt based on the vulnerability score satisfying a threshold; or
authenticate the access attempt based on the vulnerability score not satisfying the threshold, optionally wherein the one or more processors, to evaluate a behavior pattern associated with the access attempt, are configured to:
compare the behavior pattern associated with the access attempt with a typical behavior pattern of an authorized user to determine the vulnerability score.

9. The zero-trust gateway system of any proceeding claim, wherein the access attempt is initiated by an access requester, and
wherein the one or more processors, to authenticate or limit the access attempt, are configured to:
validate, based on the information, whether the access requester has an entitlement provisioned for accessing the SSO service provider entity; and
authenticate the access attempt based on the access requester having the entitlement provisioned for accessing the SSO service provider entity.

10. The zero-trust gateway system of any proceeding claim, wherein the one or more processors, to authenticate or limit the access attempt, are configured to:
determine a confidence score based on the information associated with the access attempt; and
grant full access to the SSO service provider entity based on the confidence score satisfying a first threshold; and
grant limited access to the SSO service provider entity based on the confidence score satisfying a second threshold; or
limit access to the SSO service provider entity based on the confidence score not satisfying the first threshold or the second threshold.

11. The zero-trust gateway system of any proceeding claim, wherein the one or more data sources include at least one of:
an endpoint protection platform,
a user data platform,
a user and entity behavior analytics platform, or
a security information and event management (SIEM) system.

12. A method for enforcing a zero-trust principle for granting access to one or more single sign-on (SSO) service provider entities provided in a zero-trust network, the method comprising:
detecting, by a zero-trust gateway system, an authentication event associated with an access attempt for an SSO service provider entity of the one or more SSO service provider entities, the access attempt being indicated by an SSO identity provider entity of one or more SSO identity provider entities;
receiving, by the zero-trust gateway system, an identity token from the SSO identity provider entity;
obtaining, by the zero-trust gateway system, information associated with the access attempt from one or more data sources in the zero-trust network;
analyzing, by the zero-trust gateway system, the access attempt based on the information and according to one or more zero-trust security protocols to authenticate or limit the access attempt; and
providing, by the zero-trust gateway system, the identity token to the SSO service provider entity for granting access to the SSO service provider entity based on authenticating the access attempt; or
blocking or amending, by the zero-trust gateway system, the identity token for limiting access to the SSO service provider entity based on limiting the access attempt.

13. The method of claim 12, wherein the access attempt is initiated by an access requester, and
wherein the method further comprises:
a) validating whether the access requester is an authorized user; and authenticating the access attempt based on the access requester being the authorized user, and/or
b) granting the access requester access to all SSO service provider entities of a plurality of SSO service provider entities based on authenticating the access attempt.

14. The method of claim 12 or 13, wherein detecting the authentication event comprises:
detecting the authentication event based on receiving the identity token.

15. A non-transitory computer-readable medium storing a set of instructions, the set of instructions comprising:
one or more instructions that, when executed by one or more processors of a system,
cause the system to carry out a method according to any one of claim 12 to 14.
